# EUROPEAN PATENT SPECIFICATION

(11) **EP 1 288 490 B1**
(45) Date of publication and mention of the grant of the patent: **19.11.2003**
(21) Application number: 02024058.6
(22) Date of filing: 07.06.1999
(51) Int. Cl.: F02M 63/02, F02M 59/46, F02M 55/02, F16K 17/02, F02M 53/02

(54) **Control and safety valve arrangement in a fuel feeding system**
Steuer- und Sicherheitsventil für Brennstoffversorgungssystem
Dispositif d'une soupape de sécurité et de régulation dans un système d'alimentation en carburant

(30) Priority: 08.06.1998 FI 981306
(43) Date of publication of application: 05.03.2003
(62) Divisional of application: 99304410.6
(73) Proprietor: Wärtsilä Technology Oy AB, 00530 Helsinki (FI)
(72) Inventor: Lehtonen, Kai, 65280 Vaasa (FI)
(74) Representative: Newby, Martin John

(56) References cited:
- US-A- 5 537 980
- US-A- 5 626 121

## Description

This invention relates to a control and safety valve arrangement of a fuel feeding system, the arrangement being of the kind according to the preamble of claim 1.

In known pressure injection systems or rail systems for feeding fuel in internal combustion engines, there is the need for different kinds of valve arrangements. Especially when heavy oil or the like is used as fuel, the viscosity of the fuel has to be decreased sufficiently, before the engine is started, to make it possible for the fuel to be injected into a cylinder. This fuel viscosity reduction is achieved in practice by circulating the fuel through the fuel feeding system so that it is warmed up. Known common rail systems also require a valve function to limit the pressures used and a valve for depressurizing the system when stopping the engine or in an emergency situation. The implementation of these functions normally requires three different valve functions each requiring a separate valve.

US-A-5537980 discloses a high pressure fuel injection system which aims to prevent leakage of fuel from fuel injection valves by dropping the pressure of a fuel accumulator. However a pressure relief valve only opens when the engine is still running.

The aim of the invention is to provide a new valve arrangement which is advantageous as to its construction and by means of which the valve functions referred to above can, at least partly, be integrated into a common construction to obtain a compact entity which is advantageous as to its costs. A further aim is for the valve arrangement to be applied in fuel feeding systems utilizing, especially, heavy fuel oil as the fuel.

The aims of the invention can be achieved by the control and safety valve arrangement of claim 1 and the other claims.

According to the present invention, a control and safety valve arrangement of the kind referred to is characterised in that the valve means include a valve member which, in its closed position, closes said return flow line and which is located in said valve chamber, in that said first control arrangement comprises a guiding member which is movable under the influence of a control pressure controlled by means of a precontrol valve between a position closing the valve member and a position opening the valve member, and in that said second control arrangement comprises a valve spring, against the force of which the valve member can be pressed. Such an arrangement makes it possible to implement different valve functions required in common rail systems by making use of common structures. Also a space saving compact construction is obtained.

The control pressure can with advantage be hydraulically implemented, the first control arrangement being, for instance, part of a servo oil circuit of the engine which is generally needed in any event to control the operation of fuel injection valves.

The spring force and prestress of the valve spring suitably determine the valve opening pressure in accordance with the limit value.

The valve spring can, with advantage, be supported against the guiding member at its end opposite to the valve member so that the guiding member acts on the valve member through the valve spring.

The guiding member may be provided with a shaft part which, in the case of a helical or coil spring, is arranged inside the valve spring. In this case, the end of the guiding member at the side of the valve member can be provided with a turnable nut for adjusting the prestress of the valve spring. The valve spring and the guiding member may, in this case, be located in a second chamber which is separated from said valve chamber by means of the valve member.

An embodiment of the invention will now be described, by way of example only, with particular reference to the accompanying drawing the sole figure of which is a sectional view of a valve arrangement according to the invention.

In the figure reference numeral 1 indicates a common pressure accumulator unit included in a fuel feeding system of an engine and from which fuel is injected, in a manner known as such, into at least two cylinders of the engine (not shown). A valve unit 3 including a valve chamber 4 is fixed, by means of screw bolts 2, to the common pressure accumulator unit 1. A pressure space 1a in the pressure accumulator unit 1 is connected by means of a duct 5 to the valve chamber 4 and, from the valve chamber 4, by a duct 6 and a pipe 7 to a fuel tank (not shown). In addition to this return flow line, the pressure space 1a is naturally in connection with the fuel tank through a fuel feeding line and pumping means in association therewith etc. Since, however, these parts do not relate to the present invention, they have not been shown in the drawings and have not been described in detail. When the engine is running, the pressure in the pressure space 1a is typically, for instance, in the order of 1200 bar.

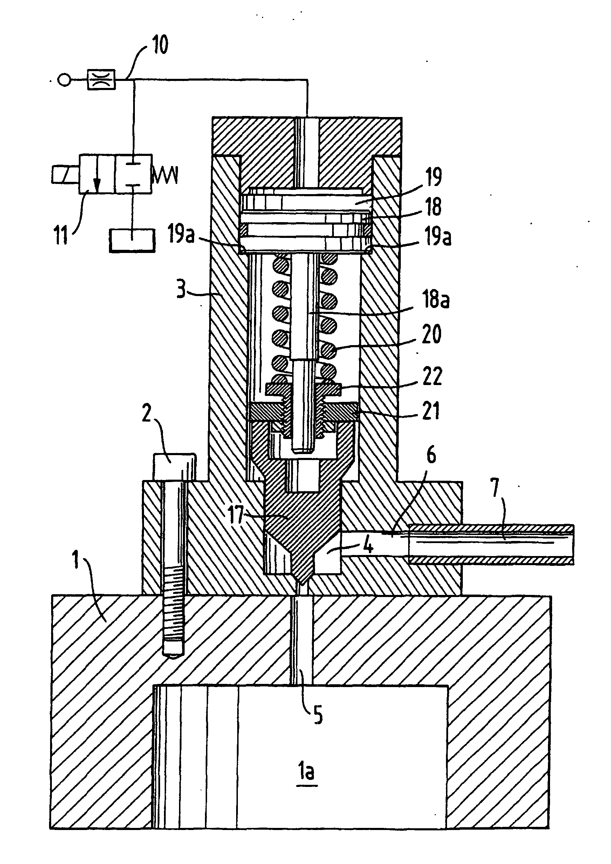

The valve unit 3 includes a single valve member 17 located in the valve chamber 4 and which normally closes the connection of the pressure space 1a via the return flow line to the fuel tank. There are two separate control arrangements provided for the valve member 17. The first control arrangement comprises a guiding member 18 arranged in a chamber 19 of the valve unit 3. The guiding member 18 is movable between positions opening and closing the valve under the influence of the pressure controlled by the precontrol valve 11 in an analogous way with regard to the description of the Figure 1 embodiment. In the figure the guiding member 18 is in its closing position, whereby it is pressed against shoulders 19a in the chamber 19. In its opening position (not shown), the guiding member 18 is not pressed against the shoulders 19a.

The second control arrangement includes a valve spring 20 one end of which acts on the valve member 17 through a plate-like element 21. The other end of the valve spring 20 is supported against the guiding member 18. Thus the guiding member 18 acts on the valve member 17 through the valve spring 20. The guiding member 18 additionally comprises a shaft part 18a having, at its end remote from the member 18, a turnable nut 22 for adjusting the prestress of the valve spring 20. As shown in the figure, the valve spring is a helical or coil spring and the shaft part 18a is positioned inside the spring.

The control of the valve member 17 provided by the valve spring 20 is completely independent of other control arrangements and can be utilized for providing the pressure limiting function. Although the guiding member 18 is only connected indirectly, through the valve spring 20, to the valve member 17, it is possible to provide a separate valve function under the control of the precontrol valve 11. Thus, when there is no pressure in the chamber 19, the guiding member 18 moves together with the spring 20, the element 21 and the valve member 17 into a position in which the connection of the pressure space 1a to the fuel tank is opened via the flow line 5, valve chamber 4, duct 6 and pipe 7. In order to ensure that the controlling pressure in the chamber 19, after connection thereof by the precontrol valve 11, is able to cause movement of the guiding member 18 back into its closing position against the shoulders 19a, the upper part of the chamber 19 may also be provided with small shoulders as shown in the figure.

On the basis of the above it is possible to limit the pressure in the pressure space 1a by means of the valve spring 20. In addition the pressure space 1a can be connected at any time to the fuel tank of the engine by means of the precontrol valve 11, i.a. in order to circulate fuel for preheating thereof before starting of the engine and in order to depressurize the high pressure fuel system in an emergency situation very quickly or in a normal situation in connection with stopping of the engine.

All the valve operations are related to the same flow line, whereby the selection of the diameter of the flow line is a compromise between, on the one hand, the needs for the circulation of fuel and, on the other hand, the pressure limiting function and in association therewith the stiffness of the valve spring and the requirement of space. On the other hand in this case only one valve member is required.

The invention is not restricted to the embodiments shown but several modifications are feasible within the scope of the ensuing claims.

## Claims

1. A control and safety valve arrangement in a fuel feeding system of an internal combustion engine, especially a large diesel engine, in which fuel is pumped from a fuel tank at least to one common pressure accumulator unit (1) and is fed therefrom under high pressure for injection into at least two cylinders of the engine, wherein the pressure accumulator unit (1,1a) is connected to the fuel tank by a separate return flow line (5,6,7), which is provided with valve means having separate first and second control arrangements operationally independent of each other so that the pressure accumulator unit (1) can be connected to the fuel tank by means of the first control arrangement when necessary and in addition by means of the second control arrangement in case the pressure in the pressure accumulator unit (1) exceeds a certain selected limit value, **characterised in that** the valve means include a valve member (17) which, in its closed position, closes said return flow line (5,6,7) and which is located in a valve chamber (4), said first control arrangement comprises a guiding member (18) which is movable under the influence of a control pressure controlled by means of a precontrol valve (11) between a position closing the valve member (17) and a position opening the valve member (17), and **in that** said second control arrangement comprises a valve spring (20), against the force of which the valve member (17) can be pressed.

2. A valve arrangement according to claim 1, **characterized in that** said control pressure is hydraulically implemented, preferably as a part of a servo oil circuit (10) of the engine.

3. A valve arrangement according to claim 1 or 2, **characterized in that** the spring force and prestress of said valve spring (20) determine the valve opening pressure in accordance with said limit value.

4. A valve arrangement according to claim 1, 2 or 3, **characterized in that** the valve spring (20) is supported against said guiding member (18) at its end opposite to the valve member (17) so that the guiding member (18) acts on the valve member (17) through the valve spring (20).

5. A valve arrangement according to any one of the preceding claims, **characterized in that** the guiding member (18) includes a shaft part (18a) which is arranged inside the valve spring (20) and the end of which at the side of the valve member (17) is provided with a turnable nut (22) for adjusting the prestress of the valve spring (20).

6. A valve arrangement according to any one of the preceding claims, **characterized in that** the valve spring (20) and the guiding member (18) are located in a second chamber (19) which is separated from said valve chamber (4) by means of the valve member (17).

## Patentansprüche

1. Steuer- und Sicherheitsventilanordnung in einem Brennstoffversorgungssystem eines Verbrennungsmotors, insbesondere eines großen Dieselmotors, in dem Brennstoff aus einem Brennstofftank mindestens zu einer gemeinsamen Druckspeichereinheit (1) gepumpt und von dort aus unter hohem Druck zur Einspritzung in mindestens zwei Zylinder des Motors zugeführt wird, wobei die Druckspeichereinheit (1, 1a) mit dem Brennstofftank durch eine separate Rückflußleitung (5, 6, 7) verbunden ist, die mit Ventilmitteln ausgestattet ist, die eine separate erste und eine zweite Steueranordnung besitzen, die betrieblich voneinander unabhängig sind, so daß die Druckspeichereinheit (1) bei Bedarf mit dem Brennstofftank mittels der ersten Steueranordnung und zusätzlich mittels der zweiten Steueranordnung verbunden werden kann, wenn der Druck in der Druckspeichereinheit (1) einen gewissen ausgewählten Grenzwert überschreitet, **dadurch gekennzeichnet, daß** die Ventilmittel ein Ventilelement (17) beinhalten, das in seiner geschlossenen Position die Rückflußleitung (5, 6, 7) schließt und sich in einer Ventilkammer (4) befindet, die erste Steueranordnung ein Führungselement (18) umfaßt, das unter dem Einfluß eines mittels eines Vorsteuerventils (11) gesteuerten Steuerdrucks zwischen einer das Ventilelement (17) schließenden Position und einer das Ventilelement (17) öffnenden Position bewegbar ist, und daß die zweite Steueranordnung eine Ventilfeder (20) umfaßt, gegen deren Kraft das Ventilelement (17) gedrückt werden kann.

2. Ventilanordnung nach Anspruch 1, **dadurch gekennzeichnet, daß** der Steuerdruck hydraulisch, vorzugsweise als Teil eines Servoölkreislaufs (10) des Motors, bewirkt wird.

3. Ventilanordnung nach Anspruch 1 oder 2, **dadurch gekennzeichnet, daß** die Federkraft und die Vorspannung der Ventilfeder (20) den Ventilöffnungsdruck in Übereinstimmung mit dem Grenzwert bestimmen.

4. Ventilanordnung nach Anspruch 1, 2 oder 3, **dadurch gekennzeichnet, daß** die Ventilfeder (20) gegenüber dem Führungselement (18) an dem dem Ventilelement (17) gegenüberliegenden Ende davon so abgestützt ist, daß das Führungselement (18) durch die Ventilfeder (20) auf das Ventilelement (17) einwirkt.

5. Ventilanordnung nach einem der vorstehend aufgeführten Ansprüche, **dadurch gekennzeichnet, daß** das Führungselement (18) ein Wellenteil (18a) beinhaltet, das innerhalb der Ventilfeder (20) angeordnet ist und dessen Ende an der Seite des Ventilelements (17) mit einer drehbaren Mutter (22) ausgestattet ist, um die Vorspannung der Ventilfeder (20) einzustellen.

6. Ventilanordnung nach einem der vorstehend aufgeführten Ansprüche, **dadurch gekennzeichnet, daß** sich die Ventilfeder (20) und das Führungselement (18) in einer zweiten Kammer (19) befinden, die mittels des Ventilelements (17) von der Ventilkammer (4) getrennt ist.

## Revendications

1. Agencement de soupape de sécurité et de régulation dans un système d'alimentation de carburant d'un moteur à combustion interne, spécialement un gros moteur diesel, dans lequel le carburant est pompé d'un réservoir de carburant à au moins un élément accumulateur de pression commun (1) et est alimenté à partir de celui-ci sous haute pression pour l'injection dans au moins deux cylindres du moteur, dans lequel l'élément accumulateur de pression (1, 1a) est connecté au réservoir de carburant par une canalisation de retour séparée (5, 6, 7) qui est pourvue de moyens de soupapes ayant un premier et un deuxième agencements de régulation séparés, indépendants l'un de l'autre lors du fonctionnement, de telle façon que l'élément accumulateur de pression (1) peut être connecté au réservoir de carburant au moyen du premier agencement de régulation quand cela est nécessaire et en outre au moyen du deuxième agencement de régulation dans le cas où la pression dans l'élément accumulateur de pression (1) dépasserait une certaine valeur limite déterminée, **caractérisé en ce que** le moyen de soupape comprend un élément de soupape (17) qui, dans sa position fermée, ferme ladite canalisation de retour (5, 6, 7) et qui est situé dans une chambre de soupape (4), ledit premier agencement de régulation comprend un élément de guidage (18) apte à se déplacer sous l'influence d'une pression de régulation commandée au moyen d'une soupape de pré régulation (11) entre une position qui ferme l'élément de soupape (17) et une position qui ouvre l'élément de soupape (17), et **en ce que** ledit deuxième* agencement de régulation comprend un ressort de soupape (20), contre la force duquel l'élément de soupape (17) peut être pressé.

2. Agencement de soupape selon la revendication 1, **caractérisé en ce que** ladite pression de régulation est mise en oeuvre hydrauliquement, préférablement en tant que partie d'un circuit d'huile de servomécanisme (10) du moteur.

3. Agencement de soupape selon la revendication 1 ou 2, **caractérisé en ce que** la force élastique et la charge d'étalonnage dudit ressort de soupape (20) déterminent la pression d'ouverture de la soupape selon ladite valeur limite.

4. Agencement de soupape selon la revendication 1, 2 ou 3, **caractérisé en ce que** le ressort de soupape (20) est supporté contre ledit élément de guide (18) à son extrémité opposée à l'élément de soupape (17) de telle manière que l'élément de guide (18) agit sur l'élément de soupape (17) à travers le ressort de soupape (20).

5. Agencement de soupape selon l'une quelconque des revendications précédentes, **caractérisé en ce que** l'élément de guide (18) comprend une partie tige (18a) qui est agencée à l'intérieur du ressort de soupape (20) et dont l'extrémité située à côté de l'élément de soupape (17) est pourvue d'un écrou apte à tourner (22) pour régler la charge d'étalonnage du ressort de soupape (20).

6. Agencement de soupape selon l'une quelconque des revendications précédentes, **caractérisé en ce que** le ressort de soupape (20) et l'élément de guide (18) sont situés dans une deuxième chambre (19) qui est séparée de ladite chambre de soupape (4) par le biais de l'élément de soupape (17).
